# EUROPEAN PATENT APPLICATION

(11) **EP 4 803 744 A1**
(43) Date of publication of application: **09.09.2026**
(21) Application number: 26160183.5
(22) Date of filing: 23.02.2026
(51) Int. Cl.: F03H 1/00

(54) **ELECTRIC THRUSTER WITH PROTECTIVE COATING ON THERMIONIC EMITTER**

(30) Priority: 05.03.2025 US 202563767171 P; 22.08.2025 US 202519307369
(71) Applicant: Aerojet Rocketdyne, Inc., Melbourne, FL 32901 (US)
(72) Inventor: LANGAN, Timothy, Melbourne, 32919 (US)
(74) Representative: Dehns

(57) **Abstract**

The invention provides a system which includes an electric thruster that is configured to generate thrust. The electric thruster includes an electron emitter that has a thermionic emission material with a protective surface layer. The invention also provides a spacecraft including the system.

## Description

### BACKGROUND

A propulsion system with a high specific impulse is needed for spacecraft operation in Very Low Earth Orbit (VLEO). Electric propulsion, such as Hall thrusters, may be suitable. In general, Hall thrusters generate thrust by ionizing a propellant gas and creating an electric field that accelerates ions through an open end of a channel to generate a reaction force that produces thrust.

Such thrusters may include a hollow cathode that relies on a low-work function thermionic emitter material as a source of free electrons for sustainment of a plasma discharge. However, when operated in the presence of oxygen, these emitter materials readily oxidize. The oxidation significantly increases the work function and reduces electron emission efficiency to the point that the device is unable to operate.

### SUMMARY

A system according to an example of the present disclosure includes an electric thruster configured to generate thrust. The electric thruster has an electron emitter that has a thermionic emission material that has a protective surface layer.

In a further embodiment of any of the preceding or succeeding embodiments, the protective surface layer is boron nitride.

In a further embodiment of any of the preceding or succeeding embodiments, the protective surface layer has a thickness of about 1 nanometer to about 100 nanometers.

In a further embodiment of any of the preceding or succeeding embodiments, the protective surface layer is a monolayer.

A further embodiment of any of the preceding or succeeding embodiments further comprises a hollow cylindrical cathode tube, and the electron emitter is disposed in the hollow cylindrical cathode tube.

In a further embodiment of any of the preceding or succeeding embodiments, the thermionic emission material is made of a metal hexaboride.

The electron emitter may be cylindrical. In a further embodiment of any of the preceding or succeeding embodiments, the electron emitter is cylindrical and is made of a metal hexaboride.

In a further embodiment of any of the preceding or succeeding embodiments, the metal of the metal hexaboride is selected from the group consisting of Rare Earth elements and combinations thereof.

In a further embodiment of any of the preceding or succeeding embodiments, the metal of the metal hexaboride is selected from the group consisting of Alkaline Earth elements and combinations thereof.

In a further embodiment of any of the preceding or succeeding embodiments, the metal of the metal hexaboride is selected from the group consisting of transition metal elements and combinations thereof.

A further embodiment of any of the preceding or succeeding embodiments includes an oxygen-containing propellant gas source fluidly connected with the hollow cylindrical cathode tube. The oxygen-containing propellant gas may be pure oxygen or a mixture of oxygen with nitrogen and/or one or more other gases. In particular embodiments, the oxygen-containing propellant gas source comprises nitrogen, such as wherein this is a mixture of oxygen with nitrogen.

In a further embodiment of any of the preceding or succeeding embodiments, the electron emitter is fluidly connected to an oxygen-containing propellant gas source. The oxygen-containing propellant gas may be pure oxygen or a mixture of oxygen with nitrogen and/or one or more other gases. In particular embodiments, the oxygen-containing propellant gas source comprises nitrogen, such as wherein this is a mixture of oxygen with nitrogen.

A further aspect is directed to the thruster of Embodiments 1P-8P below. In Embodiments 1P-8P, the electric thruster, or specifically the electron emitter, the thermionic emission material and/or the protective surface layer may be as defined in any preceding embodiment. The features described in the detailed description below may also apply equally to Embodiments 1P-8P.
Embodiment 1P. An electric thruster comprising:
   an electron emitter comprising a thermionic emission material having a protective surface layer.
Embodiment 2P. The electric thruster as recited in Embodiment 1P, wherein the protective surface layer is boron nitride.
Embodiment 3P. The electric thruster as recited in Embodiment 1P or 2P, further comprising a hollow cylindrical cathode tube, and the electron emitter is disposed in the hollow cylindrical cathode tube.
Embodiment 4P. The electric thruster as recited in any of Embodiments 1P-3P, wherein the electron emitter is cylindrical and is made of a metal hexaboride.
Embodiment 5P. The electric thruster as recited in Embodiment 4P, wherein the metal is selected from the group consisting of Rare Earth elements and combinations thereof.
Embodiment 6P. The electric thruster as recited in Embodiment 4P, wherein the metal is selected from the group consisting of Alkaline Earth elements and combinations thereof.
Embodiment 7P. The electric thruster as recited in Embodiment 4P, wherein the metal is selected from the group consisting of transition metal elements and combinations thereof.
Embodiment 8P. The electric thruster as recited in any of Embodiments 1P-7P, wherein the protective surface layer has a thickness of about 1 nanometer to about 100 nanometers.

A spacecraft according to an example of the present disclosure includes the system, or the thruster, any of the preceding embodiments.

The present disclosure may include any one or more of the individual features disclosed above and/or below alone or in any combination thereof.

### BRIEF DESCRIPTION OF THE DRAWING

The various features and advantages of the present disclosure will become apparent to those skilled in the art from the following detailed description. The drawing that accompanies the detailed description can be briefly described as follows.
Figure 1 illustrates an electric thruster that has a thermionic emitter formed of a metal hexaboride alloy (MB₆).
Figure 2 illustrates a thermionic emitter with a protective coating.

### DETAILED DESCRIPTION

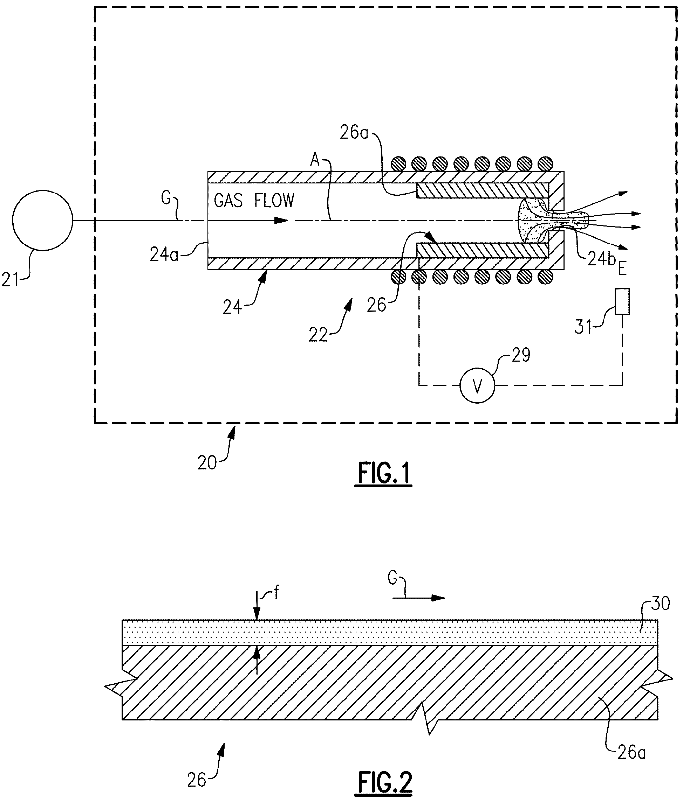

Figure 1 schematically illustrates an example of a system that includes an electric thruster 20, such as a Hall thruster. In general, an electric thruster is a type of ion thruster in which a propellant gas (e.g., xenon, krypton, nitrogen, oxygen, etc.) is ionized and accelerated in an electric field to produce thrust. In the illustrated example, the thruster 20 is connected to an oxygen-containing propellant gas source 21, such as pure oxygen or a mixture of oxygen with nitrogen and/or one or more other gases.

The thruster 20 includes a cylindrical hollow cathode thermionic emitter 22. The thermionic emitter 22 is chosen in the electric propulsion because it produces free electrons at moderate operating temperatures and this production of electrons is enabled by a material with a low work function.

The hollow cathode thermionic emitter 22 includes a hollow cathode tube 24 disposed along an axis A. The tube 24 has an inlet end 24a through which propellant gas G is provided and an orifice 24b at the opposed end, through which the gas exits. The interior of the tube 24 near the end with the orifice 24b is lined with a cylindrical thermionic insert 26 that is made of a bulk thermionic material 26a. The term "bulk" means that the thermionic material 26a is the primary, self-supporting foundational material that provides the structure of the insert 26, as opposed to a conformal layer or coating of material.

A heater 28, e.g., a coil, is disposed around the outside of the tube 24 at the axial location of the insert 26. The heater 28 heats the insert 26 to its thermionic emission temperature, and a power source 29 applies a voltage to generate an electric field E between the insert 26 and a downstream electrode 31 to accelerate the free electrons released by the insert 26 to ionizing potential, thus generating and sustaining a plasma from the propellant gas G.

Due to oxygen in the propellant gas G, the electric thruster 20 operates in an oxygen environment. However, the thermionic material 26a is reactive with oxygen. Oxygen and oxygen-containing molecules (e.g., from water or carbon di/monoxide) in the propellant gas G can cause oxidation of a thermionic material at typical operating conditions of approximately 1500°C and an oxygen partial pressure of 10⁻² torr to 10⁻⁶ torr, which decreases the electric current output of the emitter 22. To enable operation in the oxygen environment without substantial loss of electric current output, the thermionic material 26a has a protective surface layer 30, shown in Figure 2. The layer 30 is protective in that it seals the material 26a from oxygen and oxygen-containing gas that may oxidize or otherwise chemically alter the thermionic material 26a and reduce electric current output. The emitter 22 can thus be used as a thermionic cathode to emit electrons in the oxygen environment.

The thermionic material 26a serves as a substrate and the layer 30 is disposed on the surface of the material 26a. As an example, the material 26a is a metal hexaboride alloy (MB₆), where the metal or metals M are selected from the group consisting of Rare Earth elements, Alkaline Earth elements, transition metal elements, and combinations thereof. In one example, the metal hexaboride is LaB₆. Given this disclosure, one of ordinary skill in the art will be able to select a metal or combination of metals for a particular implementation. Rare Earth elements include Sc, Y, La, Ce, Pr, Nd, Pm, Sm, Eu, Gd, Tb, Dy, Ho, Er, Tm, Yb, Lu, and combinations of these elements. Alkaline Earth elements include the six elements of group 2 of the Periodic Table, and transition metal elements include the elements of groups 3-12 on the Periodic Table and the elements of the lanthanide and actinide series, some of which may also be known as refractory metals. In further examples, the metal of the metal hexaboride is an alloy of two or more of the metals, such as two or more rare Earth metals.

The surface layer 30 is made of hexagonal boron nitride (hBN) that has a layer thickness, t, of 1 monolayer up to 1 micrometer. In one example, the thickness is from about 1 nanometer up to about 100 nanometers. The thickness t is substantially less than the thickness of the insert 26, which may be about 100 to about 500 times as thick as the layer 30.

The integrity of the layer 30 may be maintained at elevated temperatures with use of a nitrogen partial pressure in the propellant gas G at the surface of the insert 26. Boron from the layer 30 reacts with nitrogen in the propellant gas G to form additional boron nitride and thereby repair defects in the layer 30 during operation of the thruster 20, and the coating is thus "self-healing." Alternatively, the emitter 22 may be removed from service to recondition the layer 30 by exposing it to a controlled partial pressure of nitrogen at a prescribed temperature.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure.

## Claims

1. A system comprising:
an electric thruster configured to generate thrust, the electric thruster including an electron emitter comprising a thermionic emission material having a protective surface layer.

2. The system as recited in claim 1, wherein the protective surface layer is boron nitride.

3. The system as recited in claim 1 or claim 2, wherein the protective surface layer has a thickness of about 1 nanometer to about 100 nanometers.

4. The system as recited in claim 2, wherein the protective surface layer is a monolayer.

5. The system as recited in any preceding claim, further comprising a hollow cylindrical cathode tube, and the electron emitter is disposed in the hollow cylindrical cathode tube.

6. The system as recited in claim 5, further comprising an oxygen-containing propellant gas source fluidly connected with the hollow cylindrical cathode tube

7. The system as recited in any preceding claim, wherein the thermionic emission material is made of a metal hexaboride.

8. The system as recited in claim 5 or claim 6, wherein the electron emitter is cylindrical and is made of a metal hexaboride.

9. The system as recited in claim 7 or claim 8, wherein the metal of the metal hexaboride is selected from the group consisting of Rare Earth elements and combinations thereof.

10. The system as recited in claim 7 or claim 8, wherein the metal of the metal hexaboride is selected from the group consisting of Alkaline Earth elements and combinations thereof.

11. The system as recited in claim 7 or claim 8, wherein the metal of the metal hexaboride is selected from the group consisting of transition metal elements and combinations thereof.

12. The system as recited in claim 7 or claim 8, wherein the metal hexaboride is LaB6.

13. The system as recited in any preceding claim, wherein the electron emitter is fluidly connected to an oxygen-containing propellant gas source.

14. The system as recited in any of claims 6-13, wherein the oxygen-containing propellant gas source comprises nitrogen.

15. A spacecraft including the system as recited in any preceding claim.
